Europäisches Patentamt

European Patent Office

Office européen des brevets

(19)

(11) Publication number : **0 651 554 A1**

(12) **EUROPEAN PATENT APPLICATION**

(21) Application number : **94420293.6**

(22) Date of filing : **25.10.94**

(51) Int. Cl.⁶ : **H04N 1/21,** G06F 1/00

(30) Priority : **29.10.93 US 146371**

(43) Date of publication of application :
**03.05.95 Bulletin 95/18**

(84) Designated Contracting States :
**DE GB**

(71) Applicant : **EASTMAN KODAK COMPANY**
**343 State Street**
**Rochester, New York 14650-2201 (US)**

(72) Inventor : **Rabbani, Majid, Eastman Kodak**
**Company**
**Patent Legal Staff,**
**343 State Street**
**Rochester, New York 14650-2201 (US)**

Inventor : **Melnychuck, Paul W., Eastman**
**Kodak Company**
**Patent Legal Staff,**
**343 State Street**
**Rochester, New York 14650-2201 (US)**
Inventor : **Axman, Michael Stuart, Eastman**
**Kodak Company**
**Patent Legal Staff,**
**343 State Street**
**Rochester, New York 14650-2201 (US)**
Inventor : **Baradar, Ali R., Eastman Kodak**
**Company**
**Patent Legal Staff,**
**343 State Street**
**Rochester, New York 14650-2201 (US)**

(74) Representative : **Boulard, Denis et al**
**Kodak-Pathé**
**Département Brevets**
**CRT-Zone Industrielle**
**F-71102 Chalon-sur-Saône Cédex (FR)**

(54) **Method and apparatus for the addition and removal of digital watermarks in a hierarchical image storage and retrieval system.**

(57)    An image processing technique is described in the context of a hierarchical image storage and retrieval system. The method allows for the controlled addition and removal of digital watermarks from selected image components in the hierarchy. The method adds a digital watermark in a selected image resolution component and the means to remove it in an additional image component termed the watermark removal component. The method employs the encryption of the watermark removal component, and decryption with a special key, or password during authorized retrieval. This technique allows users of a distributed system the convenience of providing the entire image hierarchy on a single storage medium permitting images containing watermarks to be accessed without restriction for browsing and proofing, while the watermark removal requires knowledge and us of a controlled code.

FIG. 2

EP 0 651 554 A1

## Cross-reference to Related Application:

The present application is related to U.S. Patent Application Serial No. 08/026,726, entitled "Method and Apparatus for Controlling Access to Selected Image Components In An Image Storage and Retrieval System" filed March 5, 1993, by P. W. Melnychuck and assigned to Kodak, the assignee of the present application.

## Technical field Of The Invention

The present invention is related to the field of digital image processing and more particularly to methods and associated apparatuses for adding and removing a digital watermark to and from a selected image resolution and the preventing of unauthorized use of associated higher resolution digital image components.

## Background Of The Invention

A number of hierarchical techniques for image coding have been described in the open technical literature and in various patents. Of particular relevance to the present invention are the following publications:

P. J. Burt and E. H. Adelson, "The Laplacian Pyramid As A Compact Code," IEEE Trans. Comm., COM-31, 532-540 (1983).

J. Seberry and J. Pieprzyk, "CRYPTOGRAPHY: An introduction to Computer Security" Prentice Hall, 1988 and the following patents:

U.S. Pat No, 4,969,204 entitled "Hybrid Residual-Based Hierarchical Storage And Display Method For High Resolution Digital Images In A Multiuse Environment," by Paul W. Melnychuck and Paul W. Jones, 1990.

U.S. Pat No, 5,048,111 entitled "Hybrid Subband-Based Hierarchical Storage And Display Method For High Resolution Digital Images In A Multiuse Environment," by Paul W. Jones and Paul W. Melnychuck, 1991.

The publication by Burt, et al. teaches an encoding method for images termed the Laplacian pyramid, the Burt pyramid, or the residual pyramid. In this technique, the original image is lowpass filtered, and this lowpass image is subsampled to take advantage of its reduced bandwidth to provide an image of reduced dimension. This process of lowpass filtering and subsampling is repeated three times to generate a hierarchical structure, or pyramid of images of successively smaller dimensions. The total number of resolution levels are created depending on the application. Each lowpass image in this pyramid is then expanded to the dimensions of the next higher level by upsampling (inserting zeros) and filtering to form a-prediction image for that level. This prediction image is subtracted from its corresponding lowpass image in a subtractor to generate difference, or residual, images. The residual images corresponding to the levels of the lowpass pyramid form another pyramid which is termed the Laplacian, Burt, or residual pyramid. This technique is motivated by the fact that the residual images have a reduced variance and entropy compared to the original or lowpass images and may be quantized and entropy encoded to provide efficient storage of the data. Reconstruction is performed by interpolating the decoded lowpass image at the bottom of the lowpass pyramid and adding in the corresponding decoded residual to generate the next level in the lowpass pyramid. This process is iterated until the original image size is reached. A progressive improvement in reconstructed image quality and resolution can thus be obtained by displaying the reconstructed lowpass filtered image at each level of the pyramid. Note that errors introduced in the encoding process are propagated from one level to the next higher level in the decoding process.

The patent to Melnychuck and Jones (U. S. Pat. No. 4,969,204) teaches a modification of the Burt pyramid scheme by extending the lowpass pyramid structure to include one or more lowpass filtered images of successively smaller dimensions beyond the set described by Burt, et al. The advancement in the method of Melnychuck and Jones is that the residual pyramid is not extended to include these corresponding extended smaller dimensions. Hence, the Melnychuck and Jones pyramid contains the Burt pyramid plus additional lowpass filtered images of smaller dimensions. In a hierarchical image storage and retrieval system, the additional lowpass filtered images of smaller dimension can be retrieved directly, without interpolation and addition of residual components. In the context of the present invention, the Melnychuck and Jones pyramid provides for low resolution images that can be used for browsing or proofing. The use of these additional low resolution images for browsing and proofing means that the customer may use a simple retrieval mechanism and need not possess a more complex and hence, more expensive retrieval device that would be used to decode the higher resolution components of the pyramid. Of course, higher resolution images requiring interpolation and residual addition may be used for browsing and proofing as well.

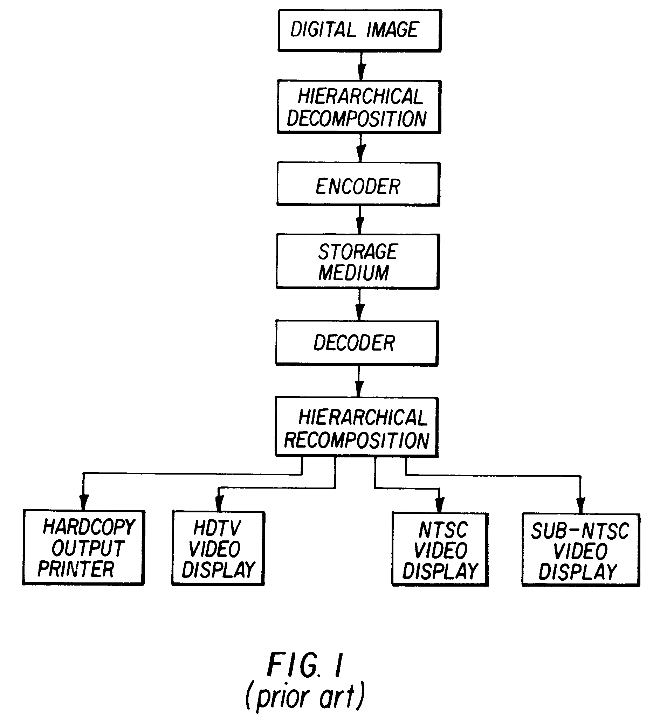

A hierarchical image processing method will be described for the addition and removal of digital watermarks in selected image components, and for the restriction of selected high resolution image components from unauthorized use. An image hierarchy is constructed in the context of a multi-resolution environment whereby the user has the option of selecting the type of display medium and the desired resolution of this display medium. In particular, two types of display media are considered: video monitors and color hard copies, although photographic, thermal imaging, and other types are also of interest. In Fig. 1 a prior art technique for decomposing, storing, recomposing, and displaying, a digital image using a hierarchical process is shown. An original digital image is decomposed to provide image versions at various resolutions to allow for the display of an HDTV quality image on video, an NTSC quality image with PAL/SECAM compatibility on video, one or more sub-NTSC quality images on video for overviews and browsing, and a very high quality image on color hard copy. Intermediate to the decomposition and recomposition steps, generally are inserted an encoding step, to compress the data for storage which in turn requires a decoding step when the data is read from storage.

## Summary Of The Invention

The present invention places a digital watermark in a selected image resolution component and the means to remove it in an additional image component termed a watermark removal component. Encryption of the watermark removal component is used to prevent use of the image for the generation of unauthorized high quality color hard copy. A watermark is a form of graphic overlay that may contain a copyright notice or information regarding the restricted use of the image. In a distributed image system it is common to deliver an image of compromised image quality for purposes of browsing or proofing. A compromised rendition of the image is commonly distributed to prevent full utility or fulfillment of the image without proper payment for the service that generated the image. The term browsing refers to the process of image selection from a plurality of images based on some user-defined criterion. Such is the case when a user may select an image from a catalog of images depicting a particular object. The term proofing refers to the process of image selection based on the degree of desirability of a given image from a plurality of images. Such is the case when a professional portrait photographer distributes a plurality of images to a customer for selection and approval. The terms watermark, browsing and proofing described herein are not limited to the examples described above.

Upon selection of the desired image by the customer, the professional delivers a high quality rendition of the image, most often in the form of a high quality color hard copy. At all times the professional possesses the sole means of generating the high quality hard copy. In a conventional photographic system the means would be the original negatives of the images; in a digital hierarchical system according to the present invention, the means are higher resolution residual components.

In a digital imaging system, and in particular one that includes a hierarchical form of digital storage and retrieval, the professional may use a suitable digital storage medium such as a CD for the distribution of proofs. In an unrestricted environment, the customer may choose a desired image resolution from the hierarchy for the purposes of browsing, proofing, or hard copy fulfillment. In those instances where it is desirable for the professional to deliver the digital storage medium containing the entire image hierarchy to the customer; it is also most economical to record the entire image hierarchy once onto the digital storage medium and avoid having to make a second copy containing only low resolution components for distribution. However, it is also desirable to restrict the use of selected high resolution components for the purpose of full image quality fulfillment until payment has been received. The professional may choose to provide low resolution image components for browsing or proofing, while maintaining restriction of the higher resolution components. Alternatively, he may be required to deliver a proof of high resolution. Such is the case when the image content contains information of small detail and the rendition of this detail is subject to approval via the proof. With traditional photographic prints, the professional may place a stamp, or watermark on a strategic location on the print, so as to render the print useless from a fulfillment point of view. Note with digital images that fulfillment may mean high quality video at NTSC/PAL/SECAM, HDTV, or hard copy. In the present invention, the professional places a digital rendition of the watermark on a selected image component. The removal of the watermark is done through an additional image component containing the reverse of the watermark. The customer, having possession of the digital storage medium CD would possess the means for generating his own high quality hard copy when authorized by the professional. Upon payment to the professional, the professional or his agent provides to the customer the information necessary to remove the watermark for full image quality fulfillment. In the present invention, that information would be an authorization code, key, or password that would be inputted to the image processing system accessing the storage medium, to unlock the restricted high resolution components. An advantage of this technique is that the customer may possess all information pertinent to generating high quality hard copy without the need to physically return to the professional for additional image components.

It may additionally be desirable to use some form of hierarchical image representation for the purpose of browsing or proofing in a distributed system because the hierarchy naturally provides a plurality of resolutions, and hence levels of image quality, from which to choose the proof image. No additional operation of compromising the image is necessary; the professional simply chooses at what resolution level(s) he wants to restrict access.

Systems that use a hierarchical structuring of the image data have not been employed in the past for distribution purposes because of the lack of means to simultaneously provide low resolution components for browsing and proofing, while offering restricted access to the remaining hierarchical components for full quality image copy. Additionally, the means to generate and remove a digital watermark in a hierarchical image structure had not been previously considered.

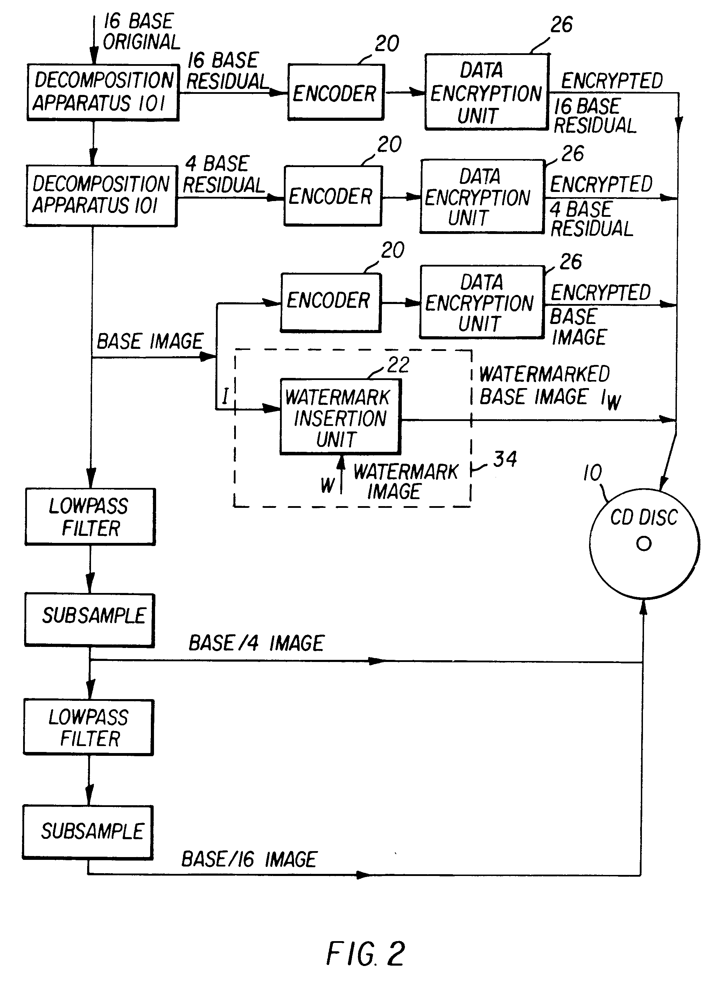

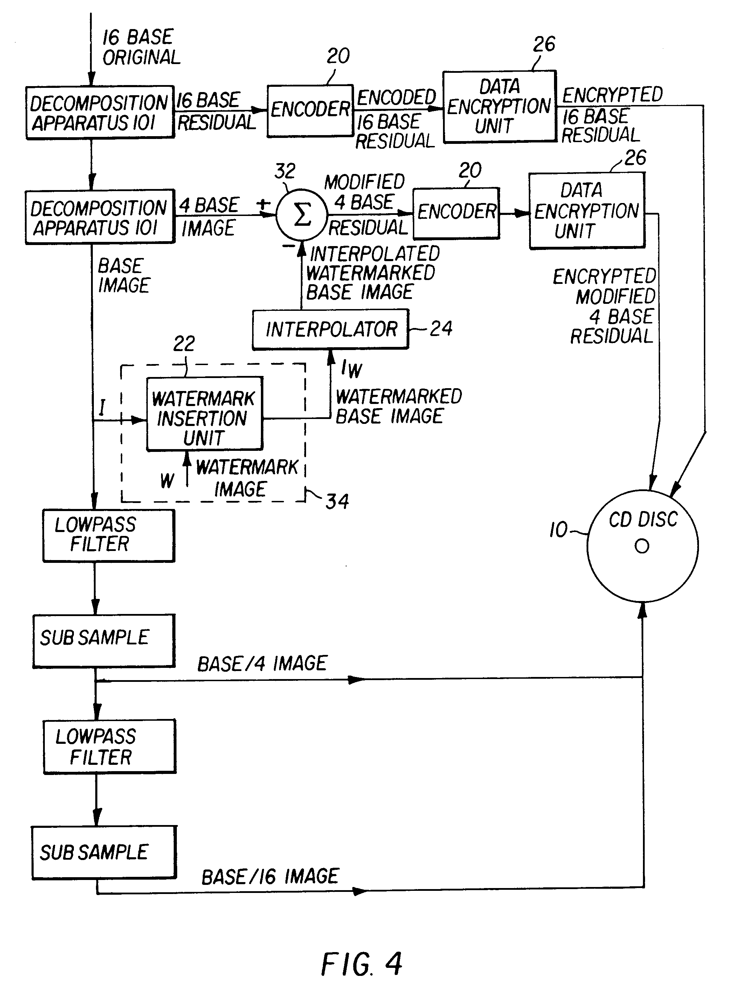

The present invention permits the advantages of hierarchical image decomposition to create a series of residual components, direct retrieval of the additional low resolution images according to the Melnychuck and Jones pyramid, the addition and removal of a digital watermark in a selected image resolution component, and prior art encryption methods applied to the watermark removal component and the residuals, to provide for a system of browsing, proofing and restriction of the high resolution image components suitable in a distributed image system. It is assumed that the residual components and the watermark removal component are symbol encoded using the encoder box 20 in Figures 2 and 4 into a binary string of 1's and 0's either via fixed-length coding techniques (where a binary code word of a fixed-length is assigned to each symbol) or variable-length encoding techniques such as Huffman coding or arithmetic coding. The residual data may also be quantized prior to encoding, or it may be encoded in a lossless manner, i.e., without quantization. Data encryption box 26 is applied to the watermark removal component and if desired, also to the encoded quantized (or nonquantized) residual data. It is assumed that the encryption process is reversible. Hence, the decryption box 28 provides the exact data prior to data encryption.

In one embodiment of the invention a storage medium is called for having stored therein at least one low resolution digital image and at least one high resolution digital image, with said high resolution digital image encoded with a watermark that requires an authorization code for removal.

From the foregoing, it can be seen that it is a primary object of the present invention to provide a method and associated apparatus for storing and controllably retrieving digital images stored in a hierarchical format on a suitable digital storage distribution medium that allows the originator of the distribution medium to distribute the medium containing the entire image hierarchy and a controllably removable watermark for the purpose of retrieving low resolution images for browsing or proofing without compromising the originator's need to withhold the means for creating hard copies of the images without the watermark.

It is another object of the present invention to provide the means for controllably inserting and removing a watermark for a digital image.

It is another object of the present invention to provide the means for compromising a selected image component of a hierarchical formatted digital image by adding a digital watermark to the selected image component, and recording the selected image component containing the watermark as part of the image hierarchy on a digital storage distribution medium.

In association with a digital image, it is another object of the present invention to provide a means for creating a watermark removal component, and for controllably restricting access to the watermark removal component.

It is another object of the present invention to provide a means for affixing a watermark to a digital image and for controllably removing the watermark.

The above and other objects of the present invention will become more apparent when taken in conjunction with the following description and drawings wherein like characters indicate like parts and which drawings form a part of the present description.

## Brief Description Of The Drawings

Fig. 1 is a block diagram illustrating the prior art Melnychuck and Jones hierarchical storage and display method.

Fig. 2 is a functional block diagram illustrating a hierarchical image decomposition technique incorporating a watermark insertion into an image component.

Fig. 3 is a functional block diagram illustrating a reconstruction technique for reconstructing the images decomposed by the system of Fig. 2.

Fig. 4 is a functional block diagram of another hierarchical image decomposition technique incorporating a watermark insertion into an image component.

Fig. 5 is a functional block diagram illustrating a reconstruction technique for reconstructing the images decomposed by the system of Fig. 4.

## Detailed Description of the Invention

In the following description of the preferred embodiments, it will be assumed that the highest resolution of the image hierarchy is composed of 3072 x 2048 pixels and that this resolution is adequate to produce photographic quality originals on an appropriate digital output device. It is also assumed that a moderately high resolution level of the hierarchy composed of 1536 x 1024 pixels is adequate to generate a high quality HDTV display, or a small-sized photographic quality print on an appropriate digital output device. It is also assumed that the lowest resolution levels of 192 x 128 pixels, 384 x 256 pixels, and 768 x 512 pixels are generated and stored onto a digital storage medium such as a CD. These resolution levels are provided to give the reader an insight as to the operation of one or more embodiments of the invention with the understanding that other resolutions or arrangements may be chosen to suit specific needs without detracting from the teachings of the present invention.

Referring now to Fig. 2, a hierarchical residual decomposition technique, for decomposing a 16BASE original image to form a 16BASE residual, a 4BASE residual, a BASE, a BASE/4, and a BASE/16 image, incorporating the teachings found substantially in Fig. 7 of the patent to Melnychuck and Jones (U. S. Pat. No. 4,969,204), in combination with the present invention is shown. The BASE image is processed in box 34 to incorporate a watermark and to provide a watermarked BASE image.

An example of a watermark insertion box 34 is given by the watermark insertion unit 22 whereby a watermark image $W$ is combined with the input image $I$ to create a watermarked image $I_W$. In this example, it is assumed that the input image $I$ and the watermark image $W$ are of the same size and the same bit-depth. For example, if the input image $I$ is an 8-bit image representing the luminance component of a color image, the watermark image $W$ would also be an 8-bit image. Similarly, the watermarked image $I_W$ would have the same size and each pixel value would be represented with 8 bits. An example of a watermark insertion unit 22 is one where the input image $I$ and the watermark image $W$ are combined according to the following equation to create the watermarked image $I_W$

$$I_W(i,j) = I(i,j) + \alpha\, W(i,j)$$

Where $(i,j)$ denotes the two-dimensional location of the pixels in the image and the operation is performed for all the pixels in the input image. The watermark image $W$ is prepared by the originator of the storage medium and may contain the logo of the originator or any other pattern that the originator may wish to use as a watermark. The parameter $\alpha$, which can be either positive or negative, controls the watermark contrast and is also selected by the originator and can vary from one image to another. Larger magnitudes of $\alpha$ would, in general, create a higher contrast watermark. Also, to guarantee that the watermarked image $I_W$ has the same bit-depth as the input image $I$, the watermarked image $I_W$ is clipped to the same range as the input image. For example, for an 8-bit image with pixel values in the range of 0 to 255, for every pixel location $(i,j)$, the value of $I_W(i,j)$ is clipped to 255 if the result of the above equation exceeds 255 and is set to zero if that result is less than zero. It should be noted that this example illustrates only one method of implementing the watermark insertion box 34 and the originator of the storage medium may incorporate any other method to generate a watermark that creates the desired effect of inhibiting the use of the image.

The BASE/16, BASE/4, and watermarked BASE images are stored on the digital storage medium 10 in direct (unencrypted) form. The BASE image, which in this case serves as the watermark removal record, is encrypted in the data encryption unit 26. The data encryption unit 26 consists of either a private-key data encryption algorithm (also referred to as symmetric data encryption algorithm) or a public-key data encryption algorithm (also referred to as asymmetric data encryption algorithm) both of which have been explained in the prior art and in the reference book by Seberry and Pieprzyk cited before. Examples of private-key encryption algorithms that can be used in the data encryption unit 26 are either block ciphers such as the Data Encryption Standard (DES) which uses a 56-bit key and operates on blocks of data of length 64 bits at a time, or a stream cipher algorithm such as RC-4, a commercially available encryption software that uses a 40-bit key component. The encrypted BASE image is also stored on the storage medium 10. The 4BASE and 16BASE residual components are also stored on the digital storage medium 10 either in direct (unencrypted) form or in encrypted form depending on the level of security desired by the application. In the case that the encryption of any or all of the residual data are needed, either the same key used in encrypting the BASE image is used or a separate key is used. The use of multiple encryption keys provides the originator of the storage medium with more flexibility in controlling the access to the various resolutions of the image hierarchy.

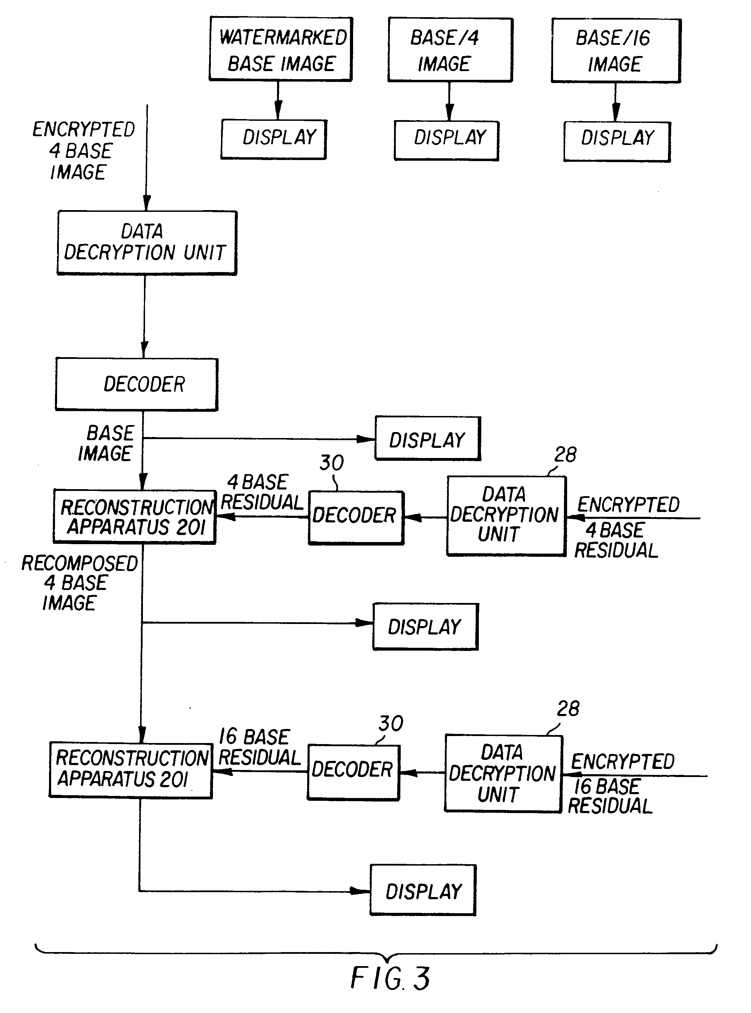

For browsing or proofing, a procedure illustrated by Fig. 3 is employed. A user retrieves the BASE/16, BASE/4, or watermarked BASE image directly without decryption from the digital storage medium 10. Upon authorization, the user inputs a decryption key(s) to the data decryption unit 28 to allow the decryption of the original BASE image (and the residuals) to be performed. An example of a data decryption unit 28 is a software implementation of a decryption algorithm corresponding to the reverse operation of the encryption algorithm employed in the data encryption unit 26. One example of a set of encryption/decryption algorithms is the Data Encryption Standard (DES) which has been explained in full detail in the reference book by Seberry *et al* mentioned before. Note that the decryption key(s) must be provided by the originator of the storage medium. Upon the decryption of the BASE image and the residual components, these components can be used to arrive at full image quality fulfillment.

In a second embodiment, illustrated in Fig. 4, the 16BASE image is decomposed by decomposition apparatus 101 into a residual pyramid consisting of the 16BASE, 4BASE, and BASE. The BASE image is further decomposed to create the BASE/4 and BASE/16 images, through low pass filtering and subsampling. BASE /4 and BASE/16 are not part of the residual pyramid and hence they are available directly for display on a monitor.

A watermark, as described in the previous embodiment in Fig. 2, is inserted in the BASE image in box 34 to arrive at a watermarked BASE image. This watermarked BASE image is then interpolated to the size of the 4BASE image using linear interpolation as indicated by the interpolator box 24. A difference is formed in subtractor 32 between the original 4BASE image and the interpolated watermarked BASE image to form a modified 4BASE residual that serves as the watermark removal record. The difference in this embodiment versus the first embodiment is that the watermark removal record is the modified 4BASE residual instead of the BASE image. This modified 4BASE residual is encrypted using the data encryption unit 26 as described before and is then stored on the storage media 10 along with the BASE/16, BASE/4, and watermarked BASE image in direct (unencrypted) form. Finally, the 16BASE residual data is stored on the digital storage medium either in direct or encrypted form depending on the application.

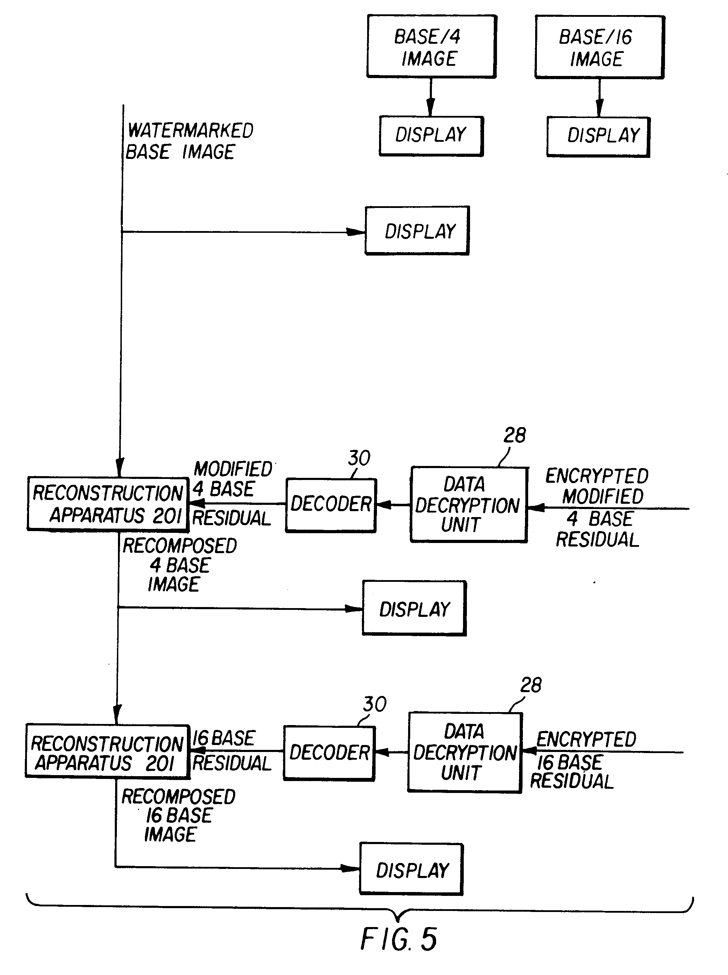

For browsing or proofing, the system of Fig. 5 is employed. The user retrieves the BASE/16, BASE/4, or watermarked BASE image directly without decryption from the digital storage medium 10. Upon authorization, the user inputs the decryption key to the data decryption unit 28 to allow the decryption to be performed to generate the modified 4BASE residual. The watermarked BASE image is interpolated using linear interpolation and is added to the decrypted modified 4BASE residual in the reconstruction apparatus 210 to recover the original 4BASE image. If the residuals have not been quantized, the 4BASE image can be exactly recovered. In the case where the residuals have been quantized, some discrepancy between the original 4BASE image and the 4BASE image recovered according to the above scheme would exist. The degree of this discrepancy would depend on the coarseness of the quantizer employed in the quantization of the residual components. Note that the decryption key must be provided by the originator of the storage medium.

It is to be understood that in some instances it may be desirable to place a watermark upon the low resolution images to control their access.

While there has been shown what are considered to be the preferred embodiments of the invention, it will be manifest that many changes and modifications may be made therein without departing from the essential spirit of the invention. It is intended, therefore, in the annexed claims, to cover all such changes and modifications as may fall within the scope of the invention.

## Parts List:

10      Digital storage medium (CD-Disc)

20      Encoder
22      Watermark insertion unit

24      Interpolator
26      Data encryption unit
28      Date decryption unit

30      Decoder
32      Subtractor
34      Watermark insertion box

101     Decomposition apparatus

201     Reconstruction apparatus

## Claims

1. A storage medium having stored therein at least one low resolution digital image and at least one high resolution digital image, with said high resolution digital image encoded with a watermark that requires an authorization code for removal.

2. The storage medium according to claim 1 and further having stored thereon at least one additional high resolution digital image that is not encoded with a watermark and is accessed with the authorization code in place of the high resolution digital image encoded with the watermark.

3. A storage medium having stored therein at least one low resolution digital image and at least one high resolution digital image in the form of a BASE image, residual image components and a watermark component, with said low resolution digital image, said BASE image or said high resolution image formed by the combination of the BASE image with said residual image components and a watermark component being accessible without an authorization code.

4. The storage medium of claim 3 in combination with an authorization code to remove the watermark component from an accessed high resolution image.

5. A system for controlling the uncompromised use of a high resolution digital image stored on a storage medium as BASE and residual components, comprising:
    means for encrypting the residual components stored on said storage medium using a watermark code;
    means for accessing the BASE and encrypted residual components;
    means for combining the accessed BASE and residual components to reconstruct the high resolution digital image with the watermark code; and
    means for authorizing the removal of the watermark code.

6. A system for controlling the uncompromised use of a high resolution digital image comprising:
    means for forming a hierarchy of lower resolution digital images from the high resolution digital image;

means for forming residual images that are a function of differences between adjacent images in the hierarchy of lower resolution digital images;

means for encrypting at least one of the formed residual images with a watermark code;

storage means for storing the formed hierarchy of lower resolution images and the at least one encrypted residual image;

means for reconstructing high resolution images by accessing and combining a lower resolution image with a residual image;

means for displaying of the at least one encrypted residual image with the watermark; and

means for controllably removing the watermark code to permit an uncompromised use of the high resolution digital image.

7. A recording medium having stored thereon a plurality of digital images with each of the digital images being comprised of a low resolution digital image component and at least one residual digital image component which is combinable with the low resolution digital image component to form a higher resolution digital image incorporating a watermark which is removable with an authorization code.

8. A method for controlling the use of a digital image stored on a storage medium in a hierarchical form comprised of a BASE image and at least one residual image component, comprising the steps of:

a) associating a watermark with said at least one residual image component;

b) permitting access to the BASE image for low resolution viewing of the digital image;

c) combining the BASE image with the at least one residual image component and an associated watermark to form the digital image for viewing, printing and/or storing; and

d) controllably providing a watermark removal code to remove the watermark from the formed digital image of step c.

9) A storage medium having stored thereon at least one digital image encoded with a watermark that requires an authorization code for removal.

FIG. 1
(prior art)

FIG. 2

*FIG. 3*

FIG. 4

FIG. 5

**European Patent Office**

## EUROPEAN SEARCH REPORT

Application Number

EP 94 42 0293

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,Y | US-A-4 696 204 (MELNYCHUCK ET AL) <br> * the whole document * <br> --- | 1-9 | H04N1/21 <br> G06F1/00 |
| Y | ELECTRONICS AND COMMUNICATIONS IN JAPAN, vol.73, no.5, May 1990, NEW YORK, US; pages 22 - 33 <br> N.KOMATSU ET AL 'A Proposal on Digital Watermark in Document Image Communication and Its Application to Realizing a Digital Signature' <br> * figures 1-5 * <br> * page 22, left column, line 1 - page 27, left column, line 23 * <br> --- | 1-9 | |
| P,Y | EP-A-0 614 308 (EASTMAN KODAK) <br> * abstract; figure 2 * <br> * column 4, line 52 - column 5, line 4 * <br> ------ | 2 | |
| | | | **TECHNICAL FIELDS SEARCHED** (Int.Cl.6) <br><br> H04N <br> G06F |

The present search report has been drawn up for all claims

| Place of search | Date of completion of the search | Examiner |
|---|---|---|
| THE HAGUE | 30 January 1995 | Powell, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
------
& : member of the same patent family, corresponding document

EPO FORM 1503 03.82 (P04C01)